# EUROPEAN PATENT SPECIFICATION

(11) **EP 4 511 147 B1**
(45) Date of publication and mention of the grant of the patent: **29.07.2026**
(21) Application number: 23719398.2
(22) Date of filing: 18.04.2023
(51) Int. Cl.: B01D 19/00, F04D 9/04, F04D 15/00

(54) **LIQUID DEGASSING SYSTEM**
FLÜSSIGKEITSENTGASUNGSSYSTEM
SYSTÈME DE DÉGAZAGE DE LIQUIDE

(30) Priority: 20.04.2022 DK PA202270207
(43) Date of publication of application: 26.02.2025
(73) Proprietor: Grundfos Holding A/S, 8850 Bjerringbro (DK)
(72) Inventor: SØRENSEN, Søren Emil, 8850 Bjerringbro (DK); ERIKSEN, Gert Friis, 8850 Bjerringbro (DK); SVENDSEN, Lasse Louis, 8850 Bjerringbro (DK)
(74) Representative: Plougmann Vingtoft a/s
(86) International application number: PCT/EP2023/060031
(87) International publication number: WO 2023/203031

(56) References cited:
- EP-A1- 0 027 179
- WO-A1-2012/045404
- FR-A1- 2 405 083
- GB-A- 1 360 478
- GB-A- 1 458 192
- GB-A- 1 485 095
- US-A- 5 227 058
- US-B2- 8 562 716

## Description

### FIELD OF THE INVENTION

The invention relates to a liquid degassing system with a liquid inlet connection, with a liquid outlet connection, with a centrifugal pump, with an electric motor driving the centrifugal pump, with a tank and with an electrical/electronic control.

### BACKGROUND OF THE INVENTION

During use of water based system such as HVAC system or in general systems including water circulation, air or other gaseous substances may be present in the water. Such gaseous substances may originate from water being added to the system from a water source where no degassing has been carried out, which typically is the situation where tap-water is used. Gaseous substances may also originate from entrainment of gasses into the water based system.

In particular water based heating or cooling systems air in the water results in a decrease of the heating of cooling capacity as the specific heat capacity of air is significantly lower than that of water whereby present of air in the water results in that the specific heat capacity of the water with air is reduced compared to water not containing air. This reduction of specific heat capacity results in a less efficient heating or cooling, inter alia as more water is to be transported to meet a given heating or cooling capacity.

Another issue pertaining to air in water is that it may give rise to corrosion, as the air contains oxygen, internally on the surface metal parts which may result in leaks and/or increased flow resistance.

Yet another issue pertaining to air in water is that cavitation in pumps or other in regions where the pressure is lowered, as air in water reduces the pressure at which cavitation occurs.

Systems for degassing of water is known and comprises typically a number of discrete components, such as valve, tank, pump which are assembled by fittings to form a degassing system which is fluidic connected to a water based system containing water to be degassed. These known degassing systems are tailored to a specific purpose and requires specialist skills to install.

One example on a degassing system is shown in WO2012/045404 which discloses a solution for degassing liquid media is to be provided by way of a pump for delivering and degassing a liquid and having a pump housing with a pump inlet and a pump outlet, wherein a pump impeller which is connected to a drive motor is provided within the pump housing and wherein a nozzle is provided in a degassing device. This is achieved with a pump by virtue of the fact that the at least one nozzle is arranged in the pump inlet, wherein an entry of liquid into an interior of the pump housing is possible only through the nozzle, and the degassing device has a control device which is connected to the drive motor.

While the device disclosed in WO2012/045404 represents a step forward towards a more compact system offering an easier installation there is a need for providing a degassing compact degassing system allowing an easy installation and easy use.

Another example of a pump with a degassing system is disclosed in GB1485095A.

Hence, an improved system for degassing liquid would be advantageous, and in particular a more compact and easy to use system for degassing would be advantageous.

### OBJECT OF THE INVENTION

It is an object of the present invention to provide a compact degassing system. It is a further object of the present invention to provide a degassing system being easy to install. It is a further object of the present invention to provide an alternative to the prior art in particular a degassing system allowing easy manufacturing. In particular, it may be seen as an object of the present invention to provide a degassing system that solves the above mentioned problems of the prior art.

### SUMMARY OF THE INVENTION

Against this background, it is an object of the invention according to the application, to improve a liquid degassing system of the known type, with regard to a design and configuration thereof, in particular concerning the aspects of manufacturing costs, but also the handling.

It is to be emphasised that although preferred embodiments of the invention is disclosed with reference to degassing liquids, the invention is particular useful in connection with degassing water.

The liquid degassing system according to the invention comprises a liquid inlet connection, a liquid outlet connection, a centrifugal pump, an electric motor driving this, as well as electrical/electronic control and a tank.

According to the invention, the centrifugal pump and the tank are arranged above one another and are connected to one another via a construction unit which comprises the liquid connections, the conduit connections between the liquid connections and the pump, as well as a connection for the tank. The impellers of centrifugal pump rotates around an axis and "above" preferably refers to a position being at a side relatively to this rotational axis. In many embodiments, the rotational axis is horizontal when the degassing system is installed, the "above" typically refers to a higher horizontal position that the horizontal position of the rotational axis.

A basic concept of the design according to the invention is to spatially concentrate the parts of the liquid degassing system which lead the fluid, and to lead them largely in a construction unit. An essential design precondition for this is that the centrifugal pump and the tank are arranged over one another and are connected to one another via this construction unit comprising liquid connections, the conduit connections between the liquid connections and the pump, as well as a connection for the tank. The construction unit according to the invention thus unifies all fluid connections of the liquid degassing system, and specifically the external ones as well as the internal ones. This has advantages with regard to the design, since the remaining components which do not lead fluid, with regard to the material as well as the design can be fashioned without them having to fulfil the preconditions demanded for leading fluid. A further design advantage but also handling advantage is to be seen in the fact that all external liquid connections are provided on this one construction unit.

According to an advantageous further development of the invention, the construction unit not only comprises the previously mentioned leading of the conduits and connections, but also forms part of the pump casing, in particular comprises the suction port of the pump. Thus within the liquid degassing system it is yet only the component surrounding the pump which is yet to be designed according to the demands for leading fluid.

According to an advantageous further development of the invention, the construction unit not only comprises the conduit connections and the previously mentioned conduit connecting, but moreover also an optional liquid discharge opening, via which the fluid located in the liquid degassing system can be dischargedliquid. Such discharge of liquid may be used e.g. during service of the liquid degassing system.

With regard to manufacturing technology, it is particularly favourable if the mentioned construction unit is configured as a single-piece or multi-piece plastic injection molded part. Other suitable manufacturing process includes additive manufacturing (3D printing) and deep drawing of thin metal sheet(s). The number of components can be reduced by way of this, by which means the storage maintenance costs and the assembly costs are reduced.

Thereby, according to one advantageous further development of the invention, the air vent valve is configured as an insertion cartridge, wherein the air vent valve is arranged in the construction unit, preferably in a conduit section which receives the air vent valve. The cartridge-like arrangement on the one hand permits the sealing body or at least the seal of the air vent valve to be exchanged in a simple manner by way of withdrawing the cartridge, and on the other hand the opening in the construction unit, via which the cartridge can be inserted or withdrawn.

With regard to the handling, it is required that the liquid connections are arranged at one side of the liquid degassing system, and specifically to a side in the direction of the centrifugal pump axis. This is to be understood in that the liquid connections are arranged in the direction of the centrifugal pump axis or parallel thereto, this with a lying axis typically on a face wall which is arranged roughly vertically in operation and which is aligned perpendicularly to this axis.

It is advantageous if the liquid connections are formed by threaded connection pieces, on which in each case a connection piece component is limitedly movable, in particular pivotably and releasably fastened. Such an arrangement is advantageous, in order to compensate alignment errors when connecting to fixed conduits. The connection piece components can moreover be exchanged in a simple manner, in order to be able to be installed with the locally present connection components. Particularities specific to different countries can be taken into consideration without a large technical effort here, since the construction unit as such is not affected by this here.

A pressure sensor which is advantageously provided for pressure detection is advantageously integrated on the construction unit at the suction side, via a connection piece.

Further, a temperature sensor may be arranged to sense the temperature of the liquid and/or temperature of the liquid degassing system. Such a temperature sensor is typically used to turn-off the operation of the degassing system, e.g. at at temperature of 70°C, in order to avoid the liquid degassing system to operate at temperature at which the system may be harmed.

An earth (ground) connection which is accessible from the outside and which according to an advantageous further development of the invention is arranged in the construction unit such that it is electrically in contact with the delivery fluid is provided in order to ensure the electrical safety of the liquid degassing system. By way of this, it is ensured that components conducting or leading liquid are all earthed (grounded).

The pump casing on the construction unit side comprises the suction port as well as a flange, via which it can be screw-fastened to a tubular pump casing part which connects thereto. The pump casing can therefore advantageously likewise be attached on the construction unit which therefore with regard to the design also forms the carrying or supporting part of the components leading fluid. The further casing components terminating the liquid degassing system itself can thus largely be fashioned freely and, if at all, only require a reduced supporting function.

The centrifugal pump and electric motor advantageously have a common shaft which is advantageously arranged in a lying manner, i.e. is arranged horizontally on operation. An inner housing is provided for the electronic control, and this inner housing is arranged above the motor, preferably next to the tank. All live component of the pump (leading current) are arranged in the rear casing part, thus far from the components leading fluid with this arrangement, and this is advantageous.

In a first aspect, the invention relates to liquid degassing system as defined in claim 1.

Terms used herein are used in manner being ordinary to a skilled person. Some of the terms used are detailed here below:
*Treatment* is preferably used to denote the process of degassing a fluid, such as liquid.

*Water* as used herein refers to a liquid containing water or a liquid essentially being water. A liquid containing water may in a non-limiting example be a water with an antifreeze agent, such as glycol.

*Gas* as used herein in connection with degassing water typically refers to air.

*A system carrying liquid to be degassed* is preferably used herein to denote a system containing liquid to be degassed and to which a degassing system is fluidicly connected to receive liquid to be degassed and to deliver at least partly degassed liquid. A system carrying liquid to be degassed is in preferred embodiments a HVAC system (heating, ventilation and/or air conditioning system).

The invention is hereinafter described in more detail by way of one embodiment example which is represented in the drawings. The various features of novelty which characterize the invention are pointed out with particularity in the claims annexed to and forming a part of this disclosure. For a better understanding of the invention, its operating advantages and specific objects attained by its uses, reference is made to the accompanying drawings and descriptive matter in which preferred embodiments of the invention are illustrated.

### BRIEF DESCRIPTION OF THE DRAWINGS

FIG. 1 is perspective representation of a preferred embodiment of a liquid degassing system;
FIG. 2 is schematic representation of components comprised in a preferred embodiment of a degassing system;
FIG. 3 is a longitudinal sectional representation through a liquid degassing system according to the invention;
FIG. 4 is a schematic representation of a further embodiment of liquid degassing system; FIG. 4A is a perspective representation and FIG. 4B is a sectional representation of the construction unit of FIG. 4A; FIG. 4C illustrates a construction unit with a lid removed, and FIG. 4D and FIG. 4E illustrate the lid in a front as well as in a rear view.
FIG: 5A is rear view of a construction unit according to yet a further embodiment of a liquid degassing system, and FIG. 5B is a cross sectional view of the construction unit shown in FIG. 5A. FIG. 5C is a close-up of a lower section of the construction unit of FIG. 5A.

### DESCRIPTION OF THE PREFERRED EMBODIMENTS

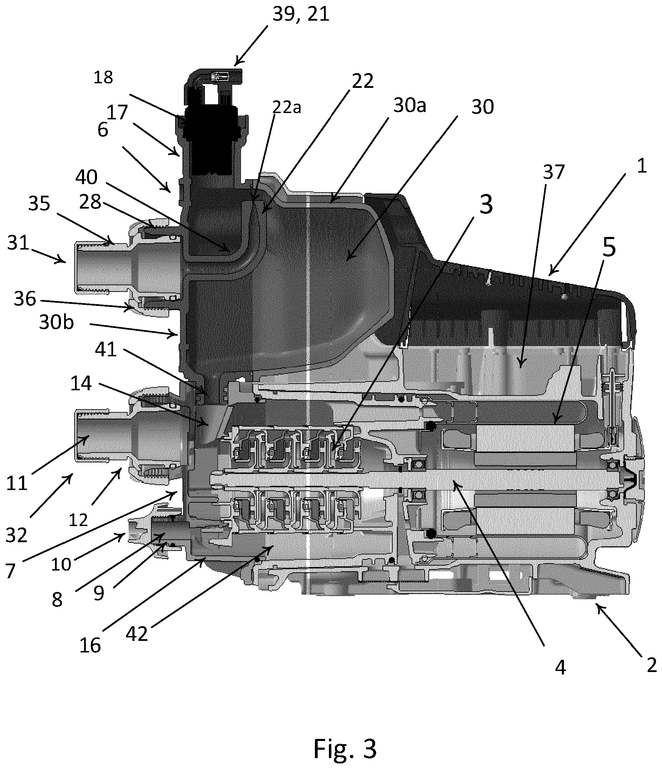

Reference is made to fig 3 illustrating a longitudinal sectional representation through a liquid degassing system according to a preferred embodiment of the invention. The liquid degassing system comprising a centrifugal pump 3 having a suction side and discharge side. The centrifugal pump 3 is typically a pump comprising a number of impeller stages arranged on a common shaft, a so-called multistage pump - and the pumping capacity may be selected according to a given demand for degassing.

The degassing system further comprising an electric motor 5 with an electrical/electronic control. The electrical/electronic control is used to set the rotational speed of electrical motor 5. The electrical motor mechanical connected to the centrifugal pump 3 to drive the centrifugal pump 3 by connecting an output shaft of the electrical motor 5 with the common shaft of the centrifugal pump.

A tank 30 is provided in the liquid degassing system and the tank 30 is arranged above the centrifugal pump 3. The tank 30 may be made from metal, such as stainless steel. The tank 30 may be made by a metal drawing process. However, the tank 30 may be made from other materials, such as a plastic material.

In the illustrated embodiment of fig. 3, the tank 30 is provided as a void inside liquid degassing system. The tank 30 and the centrifugal pump 3 are connected to one another via a construction unit 6 which comprises a liquid inlet connection 31 for supplying liquid to the liquid degassing system, a liquid outlet connection 32 to output liquid from the liquid degassing system. As will become apparent from the following disclosure, the construction unit 6 provides fluid connections inter alia between the tank 30 and the exterior, between the tank 30 and the suction side of the centrifugal pump 3, and between the discharge side of the centrifugal pump 3 and the exterior of the liquid degassing system.

A gas outlet 39 is arranged in fluidic connection with an upper position of the tank 30. The gas outlet is configured to allow gas to flow out from the tank 30 while preventing gas from being sucked into the tank 30 through the gas outlet 39. In the invention, the gas outlet is embodied as a one way check-valve. A purpose of the gas outlet 39 is to allow for flushing out gas being collected in the tank 30 during a degassing. As will be described in further details below, degassing comprising producing by use of the centrifugal pump a vacuum in the tank 30 resulting in the generation of a gas above a surface of liquid in the tank 30 and this gas is flush out by introducing liquid into the tank while the centrifugal pump is either not running or running at reduced speed. The incoming liquid will displace the gas out through the gas outlet 39.

A first fluid conduit 40 is provided connecting the liquid inlet connection 31 with the tank 30 and a second fluid conduit 41 is provided connecting the tank 30 with the suction side of centrifugal pump 3. Further, a third fluid conduit 42 connecting the liquid outlet connection 32 and the discharge side of the centrifugal pump 3. As illustrated in fig. 3, these fluid conduits are provided in the construction unit 6.

The liquid inlet connection 31 defines an external liquid inlet connection of the liquid degassing system and the liquid outlet connection 32 defines an external liquid outlet connection of the liquid degassing system. In the illustrated embodiment of fig. 3, these openings are shown with protective caps blocking dirt or other substances from entering the openings during e.g. transportation, and these caps are to be removed when the degassing system is commissioned. As also illustrated, the centrifugal pump 3 is located downstream of the liquid inlet connection 31 and upstream of the liquid outlet connection 32 with respect to a flow of fluid inlet through the inlet connection and outlet through the outlet connection. The construction unit 6 can be configured as a single-piece or multi-piece plastic injection molded component - in the embodiment shown in fig. 3 it is made as a two-piece component.

As shown in fig. 3, a wall section 30b of the construction unit 6 defines a wall section of the tank 30. Thus, with one or more wall section of the tank defined within the liquid degassing system and a wall section defined by the construction unit 6, the void of the tank is defined when the construction unit is applied to the liquid degassing system.

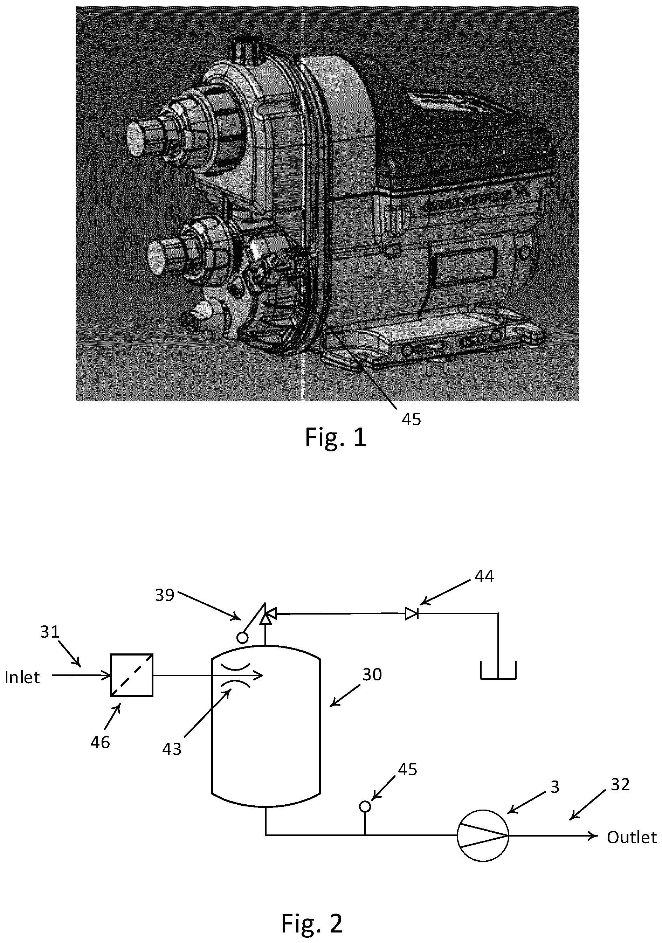

FIG. 2 which is a schematic representation of components comprised in a preferred embodiment of a degassing system shows the following components a tank 30 with a gas outlet 39, a centrifugal pump 3 and a check valve 44. In the illustrated embodiment the gas outlet 39 comprising an air vent valve, such as a automatic air vent valve and the air outlet of the air vent valve is fluidic connected with the check valve 44. When the pump is pumping, liquid to be degassed enters into the tank 30 at the inlet and passes through the throttling device 43 whereby the pressure in the tank is reduced relatively to the pressure at the inlet. By this reduction of pressure, a vacuum is generated inside the tank 30 generating a head-space occupied by degassed gas above a liquid surface in the tank 30. During this, the check valve 44 is closed and the level of the liquid surface typically continues to move downwardly. The pumping action and infeed of liquid are typically continued until the whole volume of the tank is filled with degassed gas. When the degassing is stopped, the pump 3 is stopped and the check valve 44 opened. The inlet is connected to a source of liquid having a higher pressure than vacuum generated inside the tank 30, whereby liquid will continue to flow into the tank 30. This inflow will begin to increase the pressure in the tank 30, the gas outlet 39 opens up and the gas contained in the tank 30 is forced out by the incoming liquid through gas outlet 39. When the tank 30 is filled with liquid, the degassing may commence by closing the check valve 44 and starting the pump 3. It is noted that the opening and closing of the check valve 44 may be actively controlled, e.g. by using solenoid activated valve, or the opening of closing may be effectuated by the pressure or flow in the system. In the latter, a passive check valve is typically used and when the pump is pumping the reduced pressure will close the valve (if the vent valve is not fully closed for inflow) and when liquid flows into the tank 30 and air is pushed out through the degassing valve, this air automatically opens the check valve 44.

Referring to the drawings, the liquid degassing system has a construction that is evident from FIG. 1 and 3. The liquid degassing system comprises a casing 1 which encloses the complete liquid degassing system and which towards the bottom merges into a foot 2, with which the liquid degassing system stands on a base surface and is typically anchored with screws. The multi-stage centrifugal pump 3 has a shaft 4 that carries impellers and reaches up to the electric motor 5 that drives the pump 3 and is arranged within the casing 1. The shaft 4 is arranged in a lying manner, i.e. the longitudinal axis of the drive lies horizontally and parallel to the placement surface of the foot 2.

In preferred embodiments, the construction unit 6 further comprises part of a pump casing defining a suction port 14 of the pump, where the liquid outlet connection 32 being located on one axial side of the construction unit 6 with respect to a longitudinal axis of the construction unit 6 and the suction port 14 being located on another axial side of the construction unit with respect to the longitudinal axis of the construction unit 6.

Liquid to be degassed is preferably introduced into the tank 30 in the form of droplets or even a mist. To accomplish this, the first fluid conduit 40 has a nozzle 22 with a nozzle outlet 22a configured to provide droplets or mist and the outlet is arranged within the interior of the tank 30 an upper position of the tank 30. In the illustrated embodiment, the nozzle outlet 22a is arranged to spray liquid upwardly into the tank 30. However, other spray directions may be used such as inclined upwardly or downwardly or horizontal. It is generally preferred that the spray is forms a hollow cone, although the invention is not limited to such hollow cone. While the first fluid conduit 40 will provide throttling to some extent, it is generally preferred to use the nozzle 22 to provide most of the throttling needed to provide a decreased pressure in the tank 30.

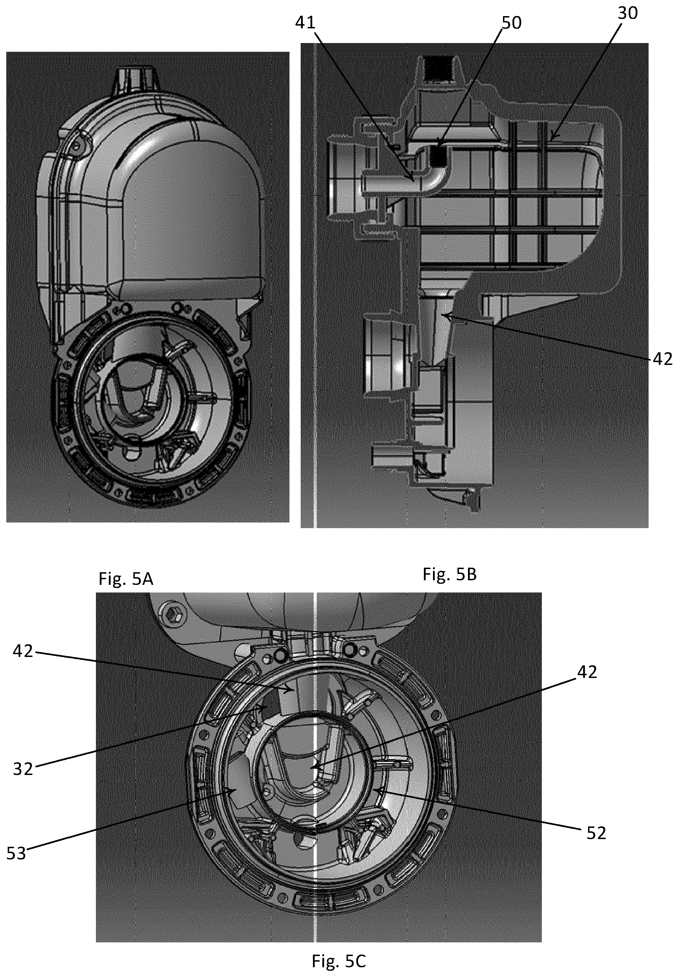

In preferred embodiments, the nozzle 22 is arranged at an outlet position of the first fluid conduit 40 by being screwed, press-fitted or glued onto or into the fluid conduit 40 at the outlet of the first fluid conduit 40. In the embodiment shown in fig. 5B the nozzle 22 is a separate piece which is screwed into the opening 50 (see e.g. 5E).

In alternative embodiments, the nozzle 22 is made integral with first fluid conduit 40. This is illustrated in fig. 3, where the channel of the first fluid conduit 40 is funnel shaped towards the outlet at the closing proceedings of the channel.

Although it may be advantageously to provide the first fluid conduit 40 as an integral part of the construction unit 6 (see fig. 3), it may also be advantageously to provide the first fluid conduit 40 as releasable arranged in the construction unit 6 which is illustrated in fig. 5B.

The liquid to be degassed may comprise particles which e.g. could block the nozzle or other component(s) of the liquid degassing system and to avoid such blocking the liquid degassing system may further comprise a filter or strainer 46 to filter particles from liquid before the liquid enters into the first fluid conduit 40. A practical position of the filter or strainer 46 is to be arranged it at an inlet of the first fluid conduit 40, but other positions upstream of the inlet of first fluid conduit 40 may be used.

The casing 1 houses the liquid degassing system essentially at five sides, according to FIG. 1 specifically at the bottom, at the top, at the face side which is on the right in FIG. 1, and at both sides which are not visible in FIG. 1, parallel to the plane of the paper. The casing 1 at the face side which is on the left in FIG. 1 is configured in an open manner and is closed off by the construction unit 6 which is formed by way of a single-piece or multi-piece plastic injection molded part(s)

In the preferred embodiment shown in fig. 3, the construction unit 6 further comprises a liquid discharge opening 8. As illustrated in FIG. 3 the construction unit 6 comprises a cap-like component 7 which is at the bottom in the installed position and which, to the lower side comprises an opening 8 which forms the liquid discharge opening 8 of the liquid degassing system. This opening 8 is provided with an outwardly projecting threaded connection piece, onto which a closure plug 10 can be sealingly screwed.

An opening 11, forming part of the liquid outlet connection 32, with a threaded connection piece 12 is integrally formed to the outside and for the liquid inlet is provided at a distance above the opening 8.

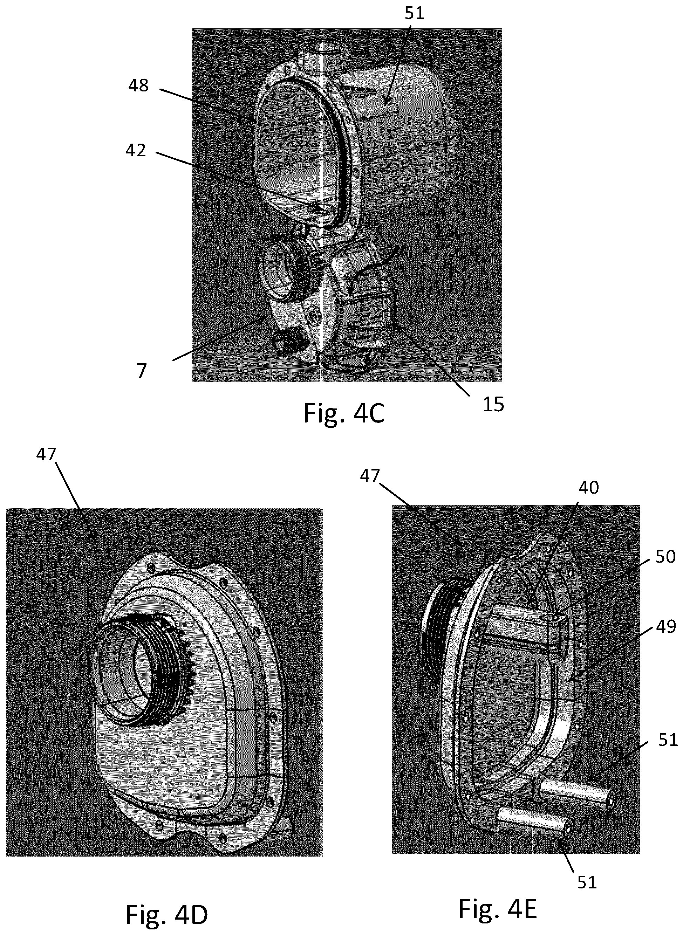

As illustrated in FIG. 3 the centrifugal pump 3 at its suction side is closed by pump casing part 16 forming part of the construction unit 6. This pump casing part 16 comprises a flange 15 (see FIG. 4C), via which the pump casing part is screw-fastened to a tubular pump casing part connecting thereto. By this, the construction unit 6 closes an opening of tubular pump casing inside the casing.

The cap-like component 7 on its flat face side is provided with the connection pieces 9 (in the disclosed embodiment, a closure plug 10 is arranged on the connection piece 9) and 12, but in the peripheral region is reinforced with ribs 13. This cap-like component 7 of the construction unit 6 forms to the inside a part of the pump casing and comprises the suction port 14 of the pump 3. This cap-like component 7 at the end of the ribs 13 comprises a flange-like, radial projection 15, via which a pump casing part 16 connecting inwardly thereon, surrounding the centrifugal pump 2 up to the drive-side end and through which the shaft 4 is led in a sealed manner, is screwed on.

To allow gas to leave the tank 30 the gas outlet 39 comprising an air vent valve 21. Such an air vent valve may advantageously be provided in the construction unit 6.

In preferred embodiments, a conduit section for receiving the air vent valve 21 may be provided in the construction unit and the conduit section connects radially into the tank 30 and is configured open at an end side. The air vent valve 21 may be configured as an insertion cartridge, wherein a seat for the cartridge is formed in the conduit section.

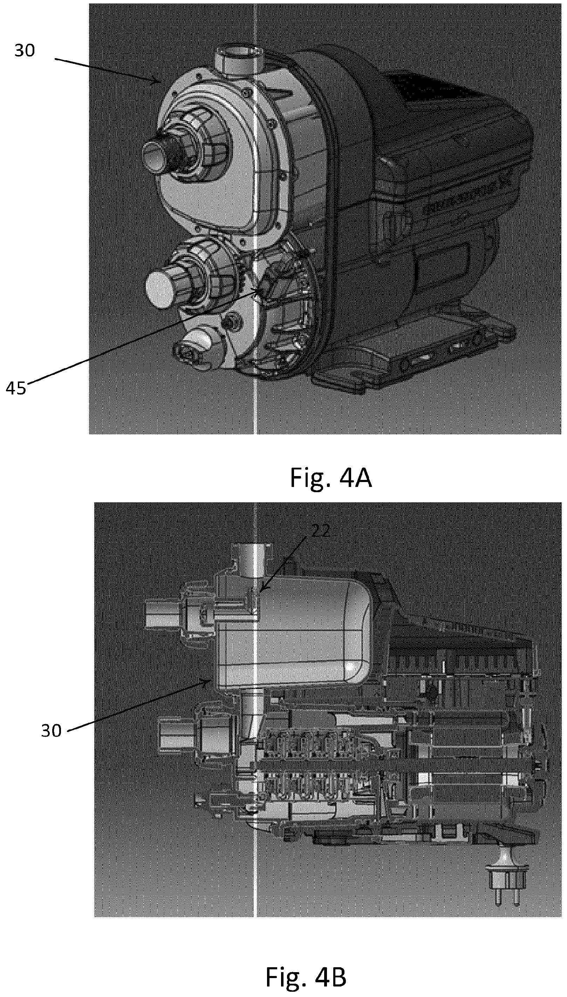

As perhaps most clearly visible in fig. 3, a tubular part 17 connects radially at the top onto the cap-like part 7 and to the top is configured in an open manner to receive the gas outlet 39 preferably in the form of a cartridge and there is provided with an inner thread (n the embodiment of FIG.4 an outer thread is provided), in which a closure plug 18 of the gas outlet 39 is sealingly screwed. The closure plug 18 carries, in the disclosed embodiment the air vent valve 21.

The air vent valve 21 is configured to include a check valve function such as to allow air to flow out and prevent flow into the gas through the air valve, or a separate check valve may be included (as illustrated in fig. 2). According, preferred embodiments includes that an air outlet of the air vent valve 21 is fluidic connected downstream of the air outlet to a check valve 44 configured to prevent backflow of gas into the air vent valve. Downstream may include that the check valve is position in close proximity with the air vent valve, e.g. arranged in the above disclosed cartridge.

As perhaps most clearly visible in FIG. 4 the liquid connections 31, 32 are, in the disclosed embodiment, arranged to one axial side of the construction unit 6 in the direction of a centrifugal pump axis or parallel thereto. However, these liquid connections 31, 32 may be arranged differently. In the disclosed embodiment, the liquid inlet connection 31 facing in a liquid inlet connection direction towards the centrifugal pump 3 and the liquid outlet connection 32 facing in a liquid outlet connection direction where the liquid outlet connection direction being parallel to the liquid inlet connection direction.

While it is possible to connect pipes, hoses or the like directly onto the inlet and outlet connection, it may be preferred to have the liquid inlet connection 31 and the liquid outlet connection 32 formed by threaded connection pieces, on which in each case a connection piece component is limitedly movably, and pivotably, and releasably fastened. By this, a connection allowing a certain degrees of flexibility in and ease of providing the connection is provided.

It is often preferred to be able to monitor the pressure in the tank, e.g. to monitor that a vacuum of a preselected magnitude is provided in the tank. To this, a connection piece for integrating an exchangeable pressure sensor cartridge is provided in the construction unit, wherein said connection piece provides a fluidic connection into the interior of the tank 30.

A threaded connection piece 28 (only labelled in FIG. 3 for the inlet) for the liquid inlet and for the liquid outlet in each case receive a connection piece component 35 which is fastened by a union nut 36 which is screwed on the respective threaded connection piece 12, 28. This connection piece component 35, as is to be deduced from FIG. 3, is configured in a convex manner in the region, in which it is seated within the threaded connection piece 28, and is provided with an 0-ring for sealing, so that this connection piece component 35 can be pivoted a little, in order to be able to compensate alignment tolerances on connection of a conduit which is to be connected to the connection piece component 35 in each case.

To electrically ground the liquid degassing system the construction unit 6 may further comprise a ground connection which is accessible from an outside and which is arranged in the construction unit 6 such that the ground connection is electrically in contact with a fluid being delivered. In preferred embodiments, this is provided by an opening for integrating a contact which is electrically connectively connected to an earth (ground) connection which is led out through the casing 1 and is provided with a connection terminal at the outside is provided within the construction unit 6, in a fluid-leading region.

The electronics of the liquid degassing system are accommodated in a separate electronics housing 37 which is arranged above the electric motor 5 and next to the tank 30 and forms part of the casing 1.

With the liquid degassing system described here, the fluid-leading components and the current-leading (live) components are not only arranged separately as is common, but also in separate parts of the casing 1, as the present description and in particular the sectioned representation according to FIG. 3 illustrates. With regard to design, this practically rules out fluid getting into the region of the electric motor and the electronics housing, even if leakages should occur in connection regions.

In the preferred embodiment shown in FIG. 3 the centrifugal pump 3 and the electric motor 5 comprise a common shaft 4 and the electric/electronic control is arranged in an inner casing above the motor. By such a configuration a highly compact system can be obtained.

Further, the centrifugal pump 3, the tank 30 and the electric motor 5 are arranged on an another axial side of the one-piece or multi-piece construction unit 6, and the liquid inlet connection 31 and the liquid outlet connection 32 is parallel to a longitudinal axis of the tank 30 and a longitudinal axis of the centrifugal pump 3.

A liquid degassing system may preferably further comprise a casing having a casing opening and a casing interior space, wherein the one-piece or multi-piece construction unit 6 closing the casing opening, the tank 30, the centrifugal pump 3, the electric motor 5 and the tank 30 formed in the casing interior space.

The construction unit being configured as a single-piece or multi-piece may advantageously be produced by a plastic injection moulding process and/or an additive manufacturing process. While these two manufacturing processes are particular well suited for producing the construction unit in plastic and/or fibre reinforced resin or polypropylene or the like, a deep drawing process may be advantageous in case the construction unit is to be made from metal.

Reference is now made to FIG. 4 illustrating a further embodiment of degassing system according to the present invention. FIG. 4A is a perspective view and illustrates that compared to the embodiment shown in FIG. 3, the tank 30 has been provided with a different design in the embodiment of FIG. 4 providing a larger internal volume of the tank 30. The tank 30 is also in this embodiment made by assembly of two main components, which perhaps most clearly shown in FIG. 4C-E.

FIG. 4C illustrates the construction unit 6 with a lid 47 covering an opening of the tank 30 removed. The lid 47 is illustrated in FIG. 4D and 5E. In FIG. 4C, an inlet opening of the second fluid conduit 42 is visible. As detailed herein, the second fluid conduit 42 connects the tank 30 with the suction side of the centrifugal pump 3, which will be further detailed below with reference to FIG. 5C.

The opening of the tank illustrated in FIG. 4C contains a protruding rim 48 mating with a recessed section 49 provided internally in the lid 47, and the lid is secured to the tank 30 by screws going through the opening provided in the rim of the lid 47. An O-ring may be provided to further seal the interface between the lid and the tank, if necessary. FIG. 4E shows the first fluid conduit 40 having an opening 50 facing upward inside the tank 30 (when the lid 47 as arranged on the tank 30). This opening 50 with its below cavity is configured to receive to receive the nozzle (not shown) 22, typically by the nozzle being screwed into the opening 50.

The construction unit 6 further comprises connecting elements 51 through which screws extend from the front side of the lid 47 and into the casing 1 to secure the tank 30 the casing 1.

Reference is made to fig. FIG. 5 illustrating an embodiment of the invention in which the construction unit is a single piece, such as a monolithic piece, although it may comprise a lid as disclosed in connection with FIG. 4. The single piece embodiment may be provided by an additive manufacturing process, such as 3D-printing or blow moulding.

FIG. 5B illustrates inter alia the second fluid conduit 42 through which liquid flows from the tank 30 and to the suction side of the centrifugal pump 3. This second fluid conduit end into a cavity provided by a wall member 52 protruding inward in the construction unit 6. This cavity defines the suction side of the centrifugal pump 3 by the protruding wall member form a bottom end of a pump casing. A cavity is provided outside protruding wall member 52 and defines part of the third fluid conduit 42 as it is fluidic connected with the outlet connection 32 and the discharge side of the centrifugal pump 3. The first fluid conduit 41 is also visible, and at the opening 50, a thread is shown which is used to screw the nozzle 22 into.

FIG. 5C also illustrates a sensor seat 53 which is an opening extending from the exterior of the construction unit 6 and into the cavity defining the suction side of the centrifugal pump 3, so that when a pressure sensor (or other sensor) is arranged in the sensor seat 53, the pressure at the suction side of the centrifugal pump 3 is registered.

It is noted that although the tank 30 as disclosed herein is disclosed as being made by assembly of two main components, the tank 30 may be made as an integral part of the construction unit 6, e.g. by manufacturing the construction unit 6 by a material additive process, such as 3D-printing or by blow moulding.

The tank 30 and the construction unit 6 may both be made from a number of materials. One material which has shown to give a good strength, low weight and offer a relatively easy production is glass fibre reinforced polypropylene, where the amount of glass fibres is around 30 volume %. Plasticisers may be added to make the material more flexible.

In use of the degassing system according to the invention, the use typically comprises a step of arranging the liquid degassing system in fluidic connection with a system carrying liquid to be degassed. This step is typically only carried out once and forms part of the installation of the degassing system.

Once connected to the system to be degassed, the centrifugal pump operating by energizing the electrical motor to lower the pressure in the tank 30 to a pre-selected pressure level. This pressure may be a vacuum of e.g. 0.8 bar and may be selected in accordance with the setup in which the degassing system is connected to. The pump is typically operated until the liquid level in the tank 30 is reduced to a pre-selected level.

When the pump is stopped, liquid is flows into the tank 30. As this will displace the gas in the tank 30, gas contained in the tank 30 is forced out through the gas outlet 39 resulting in a filling of the tank 30 with liquid whereafter the pump may be operated to degas the fluid that has entered the tank 30.

A manometer and/or a flow meter may be provided at the gas outlet 39 to allow readout of the pressure and/or flow upstream of the gas outlet 39.

### List of Reference Numerals

- 1: casing
- 2: foot
- 3: centrifugal pump
- 4: shaft
- 5: electric motor
- 6: construction unit
- 7: cap-like part
- 8: opening (discharge opening)
- 9: threaded connection piece (discharge)
- 10: closure plug
- 11: opening
- 12: threaded connection piece (liquid inlet)
- 13: ribs of 7
- 14: suction port
- 15: flange-like projection of 7
- 16: pump casing part
- 17: tubular part of 6
- 18: closure plug
- 19: holder
- 21: air vent valve
- 22: Nozzle
- 22a: Nozzle outlet
- 23: annular body
- 24: guide cross
- 25: helical compression spring
- 26: 0-ring
- 27: annular channel
- 28: threaded connection piece (liquid outlet)
- 29: threaded connection piece (for tank)
- 30: tank
- 31: inlet connection
- 32: outlet connection
- 33: support arms
- 35: connection piece components
- 36: union nuts
- 37: electronics housing
- 38: opening for contact
- 39: gas outlet
- 40: first fluid connection
- 41: second fluid connection
- 42: third fluid connection
- 43: Throttling device
- 44: Check valve
- 45: Pressure sensor
- 46: Filter
- 47: Lid
- 48: Protruding rim
- 49: Recessed section
- 50: Opening (of first fluid conduit)
- 51: Connecting element
- 52: Wall member
- 53: Sensor seat

## Claims

1. A liquid degassing system comprising:
• a centrifugal pump (3) having a suction side and discharge side;
• an electric motor (5) with an electrical/electronic control, said electrical motor being connected to the centrifugal pump (3) to drive the centrifugal pump (3); and
• a tank (30), wherein the tank (30) is arranged above the centrifugal pump (3), and the tank and the centrifugal pump are connected to one another via a construction unit (6) which comprises a liquid inlet connection (31) for supplying liquid to the liquid degassing system, a liquid outlet connection (32) to output liquid from the liquid degassing system,
• a gas outlet (39) arranged in fluidic connection with an upper position of the tank (30), said gas outlet being configured to allow gas to flow out from the tank (30) while preventing gas from being sucked into the tank (30) through the gas outlet (39) by comprising a check valve (44),
• a first fluid conduit (40) connecting the liquid inlet connection (31) with the tank (30) and a second fluid conduit (41) connecting the tank (30) with the suction side of centrifugal pump (3), and
• a third fluid conduit (42) connecting the liquid outlet connection (32) and the discharge side of the centrifugal pump (3),
wherein
• a wall section (30b) of the construction unit (6) defines a wall section of the tank (30),
• the liquid inlet connection (31) defining an external liquid inlet connection of the liquid degassing system, the liquid outlet connection (32) defining an external liquid outlet connection of the liquid degassing system, the centrifugal pump (3) being located downstream of the liquid inlet connection (31) and upstream of the liquid outlet connection (32) with respect to a flow of fluid,
• the construction unit (6) further comprises part of a pump casing defining a suction port (14) of the pump, the liquid outlet connection (32) being located on one axial side of the construction unit (6) with respect to a longitudinal axis of the construction unit (6) and the suction port (14) being located on another axial side of the construction unit with respect to the longitudinal axis of the construction unit (6)
• the liquid connections (31, 32) are arranged to one axial side of the construction unit (6) in the direction of a centrifugal pump axis or parallel thereto, the liquid inlet connection (31) facing in a liquid inlet connection direction towards the centrifugal pump (3), the liquid outlet connection (32) facing in a liquid outlet connection direction, the liquid outlet connection direction being parallel to the liquid inlet connection direction, and,
• said liquid is water and degassed gas is air.

2. A liquid degassing system according to claim 1 wherein, the construction unit (6) being configured as a single-piece or multi-piece component.

3. A liquid degassing system according to any one of the preceding claims, wherein the construction unit (6) further comprises a liquid discharge opening (8).

4. A liquid degassing system according to any one of the preceding claims, wherein said first fluid conduit (40) comprising a nozzle (22) with a nozzle outlet (22a) arranged within an interior of the tank (30) an upper position of the tank (30).

5. A liquid degassing system according to claim 4, wherein the nozzle (22) is arranged at an outlet position of the first fluid conduit (40), preferably being arranged by being screwed, press-fitted or glued onto or into the fluid conduit (40) at the outlet of the first fluid conduit (40).

6. A liquid degassing system according to any one of the preceding claims, wherein the gas outlet (39) comprising an air vent valve (21), such as an automatic air vent valve, preferably provided in the construction unit (6).

7. A liquid degassing system according to claim 6, wherein a conduit section for receiving the air vent valve (21) connects radially into the tank (30) and is configured open at an end side.

8. A liquid degassing system according any one of the preceding claims 6-7, wherein an air outlet of the air vent valve (21) is fluidic connected downstream of the air outlet to a check valve (44) configured to prevent backflow of fluid into the air vent valve.

9. A liquid degassing system according to any one of the preceding claims, wherein a sensor seat (53) for integrating an exchangeable pressure sensor cartridge is provided in the construction unit, wherein said sensor seat provides a fluidic connection into a cavity defining a suction side of the centrifugal pump (3).

10. A liquid degassing system according to any one of the preceding claims, wherein a pump casing part (16) of the construction unit (6) comprises a flange (15), via which the pump casing part is screw-fastened to a tubular pump casing part connecting thereto, wherein the construction unit (6) closes an opening of the tubular pump casing.

11. A liquid degassing system according to any one of the preceding claims, wherein the centrifugal pump (3) and the electric motor (5) comprise a common shaft (4) and the electric/electronic control is arranged in an inner casing above the motor.

12. A liquid degassing system according to any one of the preceding claims, wherein the centrifugal pump (3), the tank (30) and the electric motor (5) are arranged on an another axial side of the one-piece or multi-piece construction unit (6), the liquid inlet connection (31) and the liquid outlet connection (32) being parallel to a longitudinal axis of the tank (30) and a longitudinal axis of the centrifugal pump (3).

13. A liquid degassing system according to any one of the preceding claims, further comprising:
• a casing comprising a casing opening and a casing interior space, the one-piece or multi-piece construction unit (6) closing the casing opening, the tank (30), the centrifugal pump (3), the electric motor (5) and the tank (30) being formed in the casing interior space.

14. A method of degassing liquid, the liquid being water, the method utilizes a liquid degassing system according to any one of the preceding claims, the method comprising
• arranging the liquid degassing system in fluidic connection with a system carrying liquid to be degassed;
• operating the centrifugal pump by energizing the electrical motor to lower the pressure in the tank (30) to a pre-selected pressure level until the liquid level in the tank (30) is reduced to a pre-selected level;
• allowing liquid to flow into the tank (30) thereby forcing the gas contained in the tank (30) out through the gas outlet (39).

## Patentansprüche

1. Flüssigkeitsentgasungssystem, umfassend:
• eine Kreiselpumpe (3) mit einer Saugseite und einer Druckseite;
• einen Elektromotor (5) mit einer elektrischen/elektronischen Steuerung, wobei der Elektromotor mit der Kreiselpumpe (3) verbunden ist, um die Kreiselpumpe (3) anzutreiben; und
• einen Tank (30), wobei der Tank (30) oberhalb der Kreiselpumpe (3) angeordnet ist, und der Tank sowie die Kreiselpumpe über eine Baueinheit (6) miteinander verbunden sind, die einen Flüssigkeitseinlassanschluss (31) zum Zuführen von Flüssigkeit in das Flüssigkeitsentgasungssystem, einen Flüssigkeitsauslassanschluss (32) zum Auslassen von Flüssigkeit aus dem Flüssigkeitsentgasungssystem umfasst,
• einen Gasauslass (39), der in Fluidverbindung mit einer oberen Position des Tanks (30) angeordnet ist, wobei der Gasauslass dazu ausgebildet ist, ein Ausströmen von Gas aus dem Tank (30) zu ermöglichen, während verhindert wird, dass Gas durch den Gasauslass (39) in den Tank (30) angesaugt wird, indem ein Rückschlagventil (44) umfasst ist,
• eine erste Fluidleitung (40), die den Flüssigkeitseinlassanschluss (31) mit dem Tank (30) verbindet, und eine zweite Fluidleitung (41), die den Tank (30) mit der Saugseite der Kreiselpumpe (3) verbindet, und
• eine dritte Fluidleitung (42), die den Flüssigkeitsauslassanschluss (32) mit der Druckseite der Kreiselpumpe (3) verbindet,
wobei
• ein Wandabschnitt (30b) der Baueinheit (6) einen Wandabschnitt des Tanks (30) definiert,
• der Flüssigkeitseinlassanschluss (31) einen externen Flüssigkeitseinlassanschluss des Flüssigkeitsentgasungssystems definiert, der Flüssigkeitsauslassanschluss (32) einen externen Flüssigkeitsauslassanschluss des Flüssigkeitsentgasungssystems definiert, wobei die Kreiselpumpe (3) in Bezug auf einen Fluidstrom stromabwärts des Flüssigkeitseinlassanschlusses (31) und stromaufwärts des Flüssigkeitsauslassanschlusses (32) angeordnet ist,
• die Baueinheit (6) weiter einen Teil eines Pumpengehäuses umfasst, der einen Saugstutzen (14) der Pumpe definiert, wobei der Flüssigkeitsauslassanschluss (32) in Bezug auf eine Längsachse der Baueinheit (6) an einer axialen Seite der Baueinheit (6) angeordnet ist und der Saugstutzen (14) in Bezug auf die Längsachse der Baueinheit (6) an einer anderen axialen Seite der Baueinheit angeordnet ist,
• die Flüssigkeitsanschlüsse (31, 32) an einer axialen Seite der Baueinheit (6) in der Richtung einer Kreiselpumpenachse oder parallel dazu angeordnet sind, wobei der Flüssigkeitseinlassanschluss (31) in einer Flüssigkeitseinlassanschlussrichtung zur Kreiselpumpe (3) hin weist, der Flüssigkeitsauslassanschluss (32) in eine Flüssigkeitsauslassanschlussrichtung weist, wobei die Flüssigkeitsauslassanschlussrichtung parallel zur Flüssigkeitseinlassanschlussrichtung verläuft, und
• die Flüssigkeit Wasser ist und das entgaste Gas Luft ist.

2. Flüssigkeitsentgasungssystem nach Anspruch 1, wobei die Baueinheit (6) als einteilige oder mehrteilige Komponente ausgebildet ist.

3. Flüssigkeitsentgasungssystem nach einem der vorstehenden Ansprüche, wobei die Baueinheit (6) weiter eine Flüssigkeitsauslassöffnung (8) umfasst.

4. Flüssigkeitsentgasungssystem nach einem der vorstehenden Ansprüche, wobei die erste Fluidleitung (40) eine Düse (22) mit einem Düsenauslass (22a) umfasst, der in einem Inneren des Tanks (30) an einer oberen Position des Tanks (30) angeordnet ist.

5. Flüssigkeitsentgasungssystem nach Anspruch 4, wobei die Düse (22) an einer Auslassposition der ersten Fluidleitung (40) angeordnet ist, vorzugsweise angeordnet durch Verschrauben, Einpressen oder Kleben an oder in die Fluidleitung (40) am Auslass der ersten Fluidleitung (40).

6. Flüssigkeitsentgasungssystem nach einem der vorstehenden Ansprüche, wobei der Gasauslass (39) ein Entlüftungsventil (21), wie etwa ein automatisches Entlüftungsventil, umfasst, das vorzugsweise in der Baueinheit (6) vorgesehen ist.

7. Flüssigkeitsentgasungssystem nach Anspruch 6, wobei ein Leitungsabschnitt zum Aufnehmen des Entlüftungsventils (21) radial in den Tank (30) mündet und an einer Endseite offen ausgebildet ist.

8. Flüssigkeitsentgasungssystem nach einem der vorstehenden Ansprüche 6-7, wobei ein Luftauslass des Entlüftungsventils (21) stromabwärts des Luftauslasses mit einem Rückschlagventil (44) in Fluidverbindung steht, das dazu ausgebildet ist, einen Rückfluss von Fluid in das Entlüftungsventil zu verhindern.

9. Flüssigkeitsentgasungssystem nach einem der vorstehenden Ansprüche, wobei in der Baueinheit eine Sensoraufnahme (53) zum Integrieren einer austauschbaren Drucksensor-Kartusche vorgesehen ist, wobei die Sensoraufnahme eine Fluidverbindung zu einem Hohlraum bereitstellt, der eine Saugseite der Kreiselpumpe (3) definiert.

10. Flüssigkeitsentgasungssystem nach einem der vorstehenden Ansprüche, wobei ein Pumpengehäuseteil (16) der Baueinheit (6) einen Flansch (15) umfasst, über den das Pumpengehäuseteil mit einem daran anschließenden rohrförmigen Pumpengehäuseteil verschraubt ist, wobei die Baueinheit (6) eine Öffnung des rohrförmigen Pumpengehäuses verschließt.

11. Flüssigkeitsentgasungssystem nach einem der vorstehenden Ansprüche, wobei die Kreiselpumpe (3) und der Elektromotor (5) eine gemeinsame Welle (4) umfassen, und die elektrische/elektronische Steuerung in einem Innengehäuse oberhalb des Motors angeordnet ist.

12. Flüssigkeitsentgasungssystem nach einem der vorstehenden Ansprüche, wobei die Kreiselpumpe (3), der Tank (30) und der Elektromotor (5) auf einer weiteren axialen Seite der einteiligen oder mehrteiligen Baueinheit (6) angeordnet sind, wobei der Flüssigkeitseinlassanschluss (31) und der Flüssigkeitsauslassanschluss (32) parallel zu einer Längsachse des Tanks (30) und einer Längsachse der Kreiselpumpe (3) verlaufen.

13. Flüssigkeitsentgasungssystem nach einem der vorstehenden Ansprüche, weiter umfassend:
• ein Gehäuse mit einer Gehäuseöffnung und einem Gehäuseinnenraum, wobei die einteilige oder mehrteilige Baueinheit (6) die Gehäuseöffnung verschließt, der Tank (30), die Kreiselpumpe (3), der Elektromotor (5) und der Tank (30) im Gehäuseinnenraum ausgebildet sind.

14. Verfahren zum Entgasen von Flüssigkeit, wobei die Flüssigkeit Wasser ist, das Verfahren ein Flüssigkeitsentgasungssystem nach einem der vorstehenden Ansprüche verwendet, wobei das Verfahren umfasst:
• Anordnen des Flüssigkeitsentgasungssystems in Fluidverbindung mit einem System, das zu entgasende Flüssigkeit führt;
• Betreiben der Kreiselpumpe durch Bestromen des Elektromotors, um den Druck im Tank (30) auf ein vorgewähltes Druckniveau zu senken, bis der Flüssigkeitsstand im Tank (30) auf ein vorgewähltes Niveau abgesunken ist;
• Einströmenlassen von Flüssigkeit in den Tank (30), wodurch das im Tank (30) enthaltene Gas durch den Gasauslass (39) herausgedrückt wird.

## Revendications

1. Système de dégazage de liquide comprenant :
• une pompe centrifuge (3) présentant un côté aspiration et un côté refoulement ;
• un moteur électrique (5) doté d'une commande électrique/électronique, ledit moteur électrique étant relié à la pompe centrifuge (3) afin d'entraîner la pompe centrifuge (3); et
• un réservoir (30), le réservoir (30) étant disposé au-dessus de la pompe centrifuge (3), et le réservoir et la pompe centrifuge étant reliés l'un à l'autre par l'intermédiaire d'une unité de construction (6) qui comprend un raccord d'entrée de liquide (31) destiné à amener du liquide au système de dégazage de liquide, un raccord de sortie de liquide (32) destiné à évacuer du liquide hors du système de dégazage de liquide,
• une sortie de gaz (39) disposée en communication fluidique avec une position supérieure du réservoir (30), ladite sortie de gaz étant configurée pour permettre au gaz de s'échapper du réservoir (30) tout en empêchant le gaz d'être aspiré dans le réservoir (30) à travers la sortie de gaz (39), par le fait qu'elle comprend un clapet anti-retour (44),
• un premier conduit de fluide (40) reliant le raccord d'entrée de liquide (31) au réservoir (30) et un deuxième conduit de fluide (41) reliant le réservoir (30) au côté aspiration de la pompe centrifuge (3), et
• un troisième conduit de fluide (42) reliant le raccord de sortie de liquide (32) au côté refoulement de la pompe centrifuge (3),
dans lequel
• une partie de paroi (30b) de l'unité de construction (6) définit une partie de paroi du réservoir (30),
• le raccord d'entrée de liquide (31) définit un raccord d'entrée de liquide externe du système de dégazage de liquide, le raccord de sortie de liquide (32) définissant un raccord de sortie de liquide externe du système de dégazage de liquide, la pompe centrifuge (3) étant située en aval du raccord d'entrée de liquide (31) et en amont du raccord de sortie de liquide (32) par rapport à un écoulement du fluide,
• l'unité de construction (6) comprend en outre une partie d'un corps de pompe, définissant un orifice d'aspiration (14) de la pompe, le raccord de sortie de liquide (32) étant situé sur un côté axial de l'unité de construction (6) par rapport à un axe longitudinal de l'unité de construction (6) et l'orifice d'aspiration (14) étant situé sur un autre côté axial de l'unité de construction par rapport à l'axe longitudinal de l'unité de construction (6),
• les raccords de liquide (31, 32) sont disposés sur un côté axial de l'unité de construction (6) dans la direction d'un axe de la pompe centrifuge ou parallèlement à celui-ci, le raccord d'entrée de liquide (31) étant orienté dans une direction de raccord d'entrée de liquide vers la pompe centrifuge (3), le raccord de sortie de liquide (32) étant orienté dans une direction de raccord de sortie de liquide, la direction de raccord de sortie de liquide étant parallèle à la direction de raccord d'entrée de liquide, et
• ledit liquide est de l'eau et ledit gaz éliminé par dégazage est de l'air.

2. Système de dégazage de liquide selon la revendication 1, dans lequel l'unité de construction (6) est configurée comme un composant monobloc ou en plusieurs pièces.

3. Système de dégazage de liquide selon l'une quelconque des revendications précédentes, dans lequel l'unité de construction (6) comprend en outre une ouverture d'évacuation de liquide (8).

4. Système de dégazage de liquide selon l'une quelconque des revendications précédentes, dans lequel ledit premier conduit de fluide (40) comprend une buse (22) ayant une sortie (22a) de buse disposée, dans un intérieur du réservoir (30), en une position supérieure du réservoir (30).

5. Système de dégazage de liquide selon la revendication 4, dans lequel la buse (22) est disposée à une position de sortie du premier conduit de fluide (40), de préférence en étant disposée par vissage, emmanchage à force ou collage sur ou dans le conduit de fluide (40) au niveau de la sortie du premier conduit de fluide (40).

6. Système de dégazage de liquide selon l'une quelconque des revendications précédentes, dans lequel la sortie de gaz (39) comprend une soupape d'évacuation d'air (21), telle qu'une soupape d'évacuation d'air automatique, de préférence disposée dans l'unité de construction (6).

7. Système de dégazage de liquide selon la revendication 6, dans lequel un segment de conduit destiné à recevoir la soupape d'évacuation d'air (21) se raccorde radialement au réservoir (30) et est configuré de manière à être ouvert sur un côté d'extrémité.

8. Système de dégazage de liquide selon l'une quelconque des revendications 6-7 précédentes, dans lequel une sortie d'air de la soupape d'évacuation d'air (21) est en communication fluidique, en aval de la sortie d'air, avec un clapet anti-retour (44) configuré pour empêcher le reflux de fluide dans la soupape d'évacuation d'air.

9. Système de dégazage de liquide selon l'une quelconque des revendications précédentes, dans lequel un logement de capteur (53) destiné à recevoir une cartouche de capteur de pression remplaçable est disposé dans l'unité de construction, ledit logement de capteur assurant une communication fluidique avec une cavité définissant un côté aspiration de la pompe centrifuge (3).

10. Système de dégazage de liquide selon l'une quelconque des revendications précédentes, dans lequel une partie (16) de corps de pompe de l'unité de construction (6) comprend une bride (15) par l'intermédiaire de laquelle la partie de corps de pompe est fixée par vissage à une partie de corps de pompe tubulaire s'y raccordant, l'unité de construction (6) obturant une ouverture du corps de pompe tubulaire.

11. Système de dégazage de liquide selon l'une quelconque des revendications précédentes, dans lequel la pompe centrifuge (3) et le moteur électrique (5) comprennent un arbre commun (4) et la commande électrique/électronique est disposée dans un boîtier interne au-dessus du moteur.

12. Système de dégazage de liquide selon l'une quelconque des revendications précédentes, dans lequel la pompe centrifuge (3), le réservoir (30) et le moteur électrique (5) sont disposés sur un autre côté axial de l'unité de construction (6) monobloc ou en plusieurs pièces, le raccord d'entrée de liquide (31) et le raccord de sortie de liquide (32) étant parallèles à un axe longitudinal du réservoir (30) et à un axe longitudinal de la pompe centrifuge (3).

13. Système de dégazage de liquide selon l'une quelconque des revendications précédentes, comprenant en outre :
• un corps comprenant une ouverture de corps et un espace interne de corps, l'unité de construction (6) monobloc ou en plusieurs pièces obturant l'ouverture du corps, le réservoir (30), la pompe centrifuge (3), le moteur électrique (5) et le réservoir (30) étant intégrés dans l'espace interne du corps.

14. Procédé de dégazage de liquide, ledit liquide étant de l'eau, le procédé utilisant un système de dégazage de liquide selon l'une quelconque des revendications précédentes, le procédé comprenant les étapes consistant à
• mettre le système de dégazage de liquide en communication fluidique avec un système acheminant du liquide à dégazer ;
• faire fonctionner la pompe centrifuge en mettant sous tension le moteur électrique pour abaisser la pression dans le réservoir (30) à un niveau de pression présélectionné, jusqu'à ce que le niveau de liquide dans le réservoir (30) soit abaissé jusqu'à un niveau présélectionné ;
• permettre au liquide de s'écouler dans le réservoir (30), ce qui force le gaz contenu dans le réservoir (30) à s'échapper à travers la sortie de gaz (39).
